(19) **Europäisches Patentamt**
**European Patent Office**
**Office européen des brevets**

(11) **EP 3 087 725 B1**

(12) **EUROPEAN PATENT SPECIFICATION**

(45) Date of publication and mention
of the grant of the patent:
**04.10.2017 Bulletin 2017/40**

(51) Int Cl.:
***H04N 1/60*** (2006.01)

(21) Application number: **14824807.3**

(22) Date of filing: **17.12.2014**

(86) International application number:
**PCT/EP2014/078192**

(87) International publication number:
**WO 2015/097032 (02.07.2015 Gazette 2015/26)**

(54) **METHOD OF MAPPING SOURCE COLORS OF IMAGES OF A VIDEO CONTENT INTO THE TARGET COLOR GAMUT OF A TARGET COLOR DEVICE**

VERFAHREN ZUR ZUORDNUNG DER QUELLFARBEN VON BILDERN EINES VIDEOINHALTS IN EINER ZIELFARBENSKALA EINER ZIELFARBENVORRICHTUNG

PROCÉDÉ DE CARTOGRAPHIE DE COULEURS SOURCES D'IMAGES D'UN CONTENU VIDÉO DANS LA GAMME DE COULEURS CIBLES D'UN DISPOSITIF DE COULEURS CIBLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2013 EP 13306869**

(43) Date of publication of application:
**02.11.2016 Bulletin 2016/44**

(73) Proprietor: **Thomson Licensing**
**92130 Issy-les-Moulineaux (FR)**

(72) Inventors:
• **STAUDER, Jurgen**
  **F-35576 Cesson-Sévigné (FR)**
• **BLONDÉ, Laurent**
  **F-35576 Cesson-Sévigné (FR)**
• **MORVAN, Patrick**
  **F-35576 Cesson-Sévigné (FR)**

(74) Representative: **Browaeys, Jean-Philippe**
**TECHNICOLOR**
**1-5, rue Jeanne d'Arc**
**92130 Issy-les-Moulineaux (FR)**

(56) References cited:
**EP-A1- 1 014 698**     **EP-A1- 2 672 712**
**US-A1- 2004 105 581**     **US-A1- 2007 046 958**
**US-A1- 2013 107 292**

• **BRAUN G J ET AL: "GAMUT MAPPING FOR PICTORIAL IMAGES", TAGA PROCEEDINGS, XX, XX, 1 January 1999 (1999-01-01), pages 645-660, XP008078676,**

## Description

### Technical Field

The invention concerns a method for color gamut mapping colors from a source content dependent color gamut in a target color gamut. Such an operation is called **"content-to-device gamut mapping"**.

### Background Art

Gamut mapping of colors of an image has the goal that the mapped colors are inside of the color gamut of a target display device. A second goal is that the mapped colors make efficient and complete use of the color gamut of the target display device. In general, color gamut mapping can be applied to any color values that are defined within a source color gamut in order to transform them such that they are included in a destination color gamut. The source color gamut can be linked to an image capture device such as camera or scanner. It can be linked to a reference display device such as a proof view display device used to control the creation or color processing of images. It can also be linked to a predefined, virtual color gamut as defined for instance in a standard such as ITU-R BT.709. The target color gamut can be linked to a specific reproduction display device. It can be linked also to a predefined gamut for transmission, compression or storage purpose. For example, it can be linked to a predefined, virtual color gamut as defined for instance in a standard such as ITU-R BT.2020. It can be linked to a specific medium such as film or paper prints. In the following we will simplify by talking about a source display device having a source gamut and a target display device having a target color gamut.

Color gamut mapping is carried out usually in specific color spaces. Some methods use the L*a*b* color space defined by the CIE in 1976. In L*a*b* space, a constant angle in a*b* plane is assumed to correspond to identically perceived hue. The L coordinate represents the perceived intensity. Unfortunately, this space was shown to not well represent hues, notably in blue tones. Other methods use the JCh color space defined in the CIECAM-02 standard defined by the CIE in 2002. In JCh space, the h coordinate is assumed to correspond to perceived hue by the human eye and the J coordinate is assumed to correspond to perceived intensity. JCh space was shown to better represent hues and intensity than L*a*b*, but it requires higher complexity to be calculated.

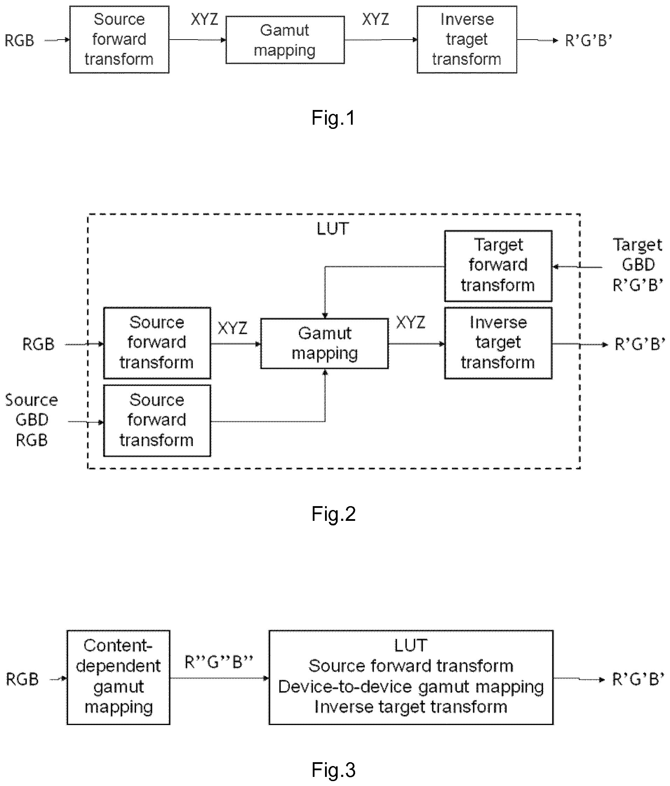

When doing gamut mapping in L*a*b* color space, the classical approach is shown in figure 1. First, a source forward transform transforms device dependent color coordinates representing the colors of an image in a device-dependent color space, for example R,G,B in the "RGB" color space, into device-independent color coordinates in a device-independent color space, for example X,Y,Z in the "XYZ" color space. Then, color gamut mapping can be applied to the XYZ coordinates since L*a*b* coordinates can be derived from and transformed into XYZ coordinates by a fixed formula standardized in 1987 by the CIE. After such a gamut mapping in the Lab color space, the mapped device independent color coordinates are usually transformed back into device dependent color coordinates.

The article entitled "Color reproduction system based on color appearance model and gamut mapping", from Fang-Hsuan GHENG et al., published in 2000 in the Proceedings of SPIE, Vol. 4080, pages 167-178, discloses a typical gamut mapping scheme using the JCh color space instead of the L*a*b* color space.

A problem addressed by this invention is the increased computational load which is required when colors should be mapped as described above in a device-independent color space as, for instance, the Lab color space. This problem is confirmed by Dong-Woo Kang et. al. in their publication entitled "COLOR DECOMPOSITION METHOD FOR MULTIPRIMARY DISPLAY USING 3D-LUT IN LINEARIZED LAB SPACE" published in the Proceedings of the SPIE vol.5667 no.1 pages 354-63. The authors maintain the transformation of color coordinates back from and forward into device independent color space but use - instead of the non-linear L*a*b* color space - a linearized device independent color space such that the color transformation of color coordinates is less heavy in computation.

Another solution to this problem of increased computational load is to establish a 3D Look-Up-Table (LUT) mapping directly device-dependent coordinates into other, mapped device-dependent coordinates. For this solution, the three processing steps such as shown in figure 1 are pre-concatenated and pre-calculated into one LUT which is then used to map color coordinates of an image. If the mapping operation by itself is fast due to the application of only one LUT, the pre-calculation of the concatenated LUT is slow. One reason for the LUT calculation being slow is that, as shown above, the device-dependent color coordinates defining a color to map, for example RGB, needs to be transformed, before mapping, into device-independent color coordinates, for example XYZ or Lab, as specified notably by the CIE.

A second problem addressed by this invention is when the gamut mapping operator depends on metadata, as for instance described in US2010-220237. If the metadata change, the mapping operator or the precalculated LUT needs to be updated or recalculated, which is usually slow. If the update is slow, the frequency of update is limited. Changing metadata can be processed only in the frequency of updates of the mapping operator, so finally, the frequency of changes in the metadata is limited. As shown in figure 2, typical metadata for classical color gamut mapping is the gamut boundary descriptions (GBD) of the source color gamut and of the target color gamut.

In a first application of such a color gamut mapping, the source GBD describes the color gamut of a source display device that is capable to reproduce colors from RGB color coordinates used to control this source display device. The target GBD describes the color gamut of a target display device that is capable to reproduce colors from R'G'B' color coordinates used to control this target display device. The GBD of the target color gamut depends for instance on the settings of the target display device and/or on the viewing conditions. In this case, the goal of classical color gamut mapping is to map the colors that can be reproduced by the source display device into the color gamut of the target display device. This operation is called **device-to-device color gamut mapping.** Often, the color gamut of the target display device is smaller than the gamut of the source display device. One may then call this operation gamut compression. The inverse case is called gamut expansion. Both cases may apply at the same time if the color gamut of the target display device is smaller than the color gamut of the source display device for colors with certain hue, luminance or saturation but is larger for other colors.

In a second application of such a color gamut mapping, the source GBD describes the color gamut of the source content itself instead of the color gamut of the source display device. The source content color gamut is usually smaller than the source device color gamut, notably if the content was produced using the source device. The source content color gamut may be larger than the source device color gamut, for instance when the content was produced using other devices. In these cases, the goal of classical color gamut mapping is to map the colors of the source content into the color gamut of the target display device. This operation is called **content-to-device gamut mapping.** The source GBD might change if the color characteristics of the content change, for instance from one group of images to another one of a video content, i.e. notably from one scene to another scene of this content. In this case, the color mapping operator needs to be updated at each change of the source content color gamut. For example, a new LUT may be calculated for every scene of a film. Since this update is usually slow, the frequency of change of the source GBD should be generally limited.

Summary of invention

The invention concerns a method for content-dependent color gamut mapping of colors from a source content color gamut into a target color gamut. This invention concerns notably "content-to-device gamut mapping".

The color mapping method of the invention as illustrated on figure 3 changes the order of operations with respect to the prior art as illustrated on figure 1. According to the invention, the mapping operation is subdivided into two main steps : first, a content-dependent mapping of colors from the source content color gamut of these colors into an intermediate color gamut which is common to all images to map, i.e. common to all groups of images or scenes, and second, a device-dependent mapping of colors from this intermediate color gamut into the target color gamut. In the first step, content-dependent gamut mapping is applied directly in the intermediate color space of an intermediate display device, i.e. applied to incoming RGB color coordinates representing colors in this intermediate color space, resulting into intermediately-mapped color coordinates R"G"B" representing the mapped colors in the same color space. In a second step, these intermediately-mapped coordinates are transformed into final target color coordinates R'G'B', using classical steps such as, as detailed below, intermediate device forward transform, intermediate device to target device gamut mapping and inverse target device transform.

For the purpose of solving the aforementioned problems, a subject of the invention is a method of, in a color mapper, mapping source colors of images of a video content into the target color gamut of a target color device thus resulting in target colors,
wherein said images are grouped into a plurality of groups associated with different source content-dependent color gamuts, each group comprising at least one image,
said gamut mapping method comprising:

- in an intermediate color space, defining a single intermediate color gamut for the whole video content,
- for each group of images, mapping each source color of this group in said intermediate color space, from the source content-dependent color gamut associated with said group into said intermediate color gamut, resulting in an intermediate color, and mapping said intermediate color from said intermediate color gamut into said target color gamut, resulting in a target color.

The color mapper is generally comprised in a display device, as a TV set or a tablet, or in a set-top-box, a gateway or any in image processing system.

Each group of images corresponds notably to a specific scene of the video content and is associated with a specific source content-dependent color gamut.

The intermediate color space is generally associated with the definition of the intermediate color gamut. This intermediate color space corresponds generally to the color space of a so-called "intermediate" display device and the intermediate color gamut is then the color gamut of this display device. This intermediate display device may be virtual, as, for instance a display device defined in a standard.

Preferably, in the mapping method, each group of at least one image is associated with a specific source content-dependent color gamut having boundaries corresponding to upper and lower limits of colors of the at least one image of this group. These upper and lower limits are for instance defined along straight lines distributed over different directions in the intermediate color space.

Preferably, for said mapping of a source color from the source content-dependent color gamut into said intermediate color gamut, said source color is represented in said intermediate color space, said source content-dependent color gamut and said intermediate color gamut are described in said intermediate color space, notably by color coordinates.

Preferably, the shape of said intermediate color gamut is a hyper cube when defined in said intermediate color space.

Preferably, said mapping from the source content-dependent color gamut into said intermediate color gamut is performed directly in said intermediate color space.

Preferably, if said intermediate color space is associated with an intermediate display device,
an intermediate forward transform is associated with said intermediate display device and defined such as to be able to transform color coordinates representing any color in said intermediate color space into color coordinates representing approximately the same color in a device-independent color space,
the target color device is modeled by a target inverse transform which is defined to be able to transform color coordinates representing any color in the device-independent color space into color coordinates representing approximately the same color in the target device-dependent color space associated with said target display device, and
the mapping of said intermediate color from said intermediate color gamut into said target gamut comprises:

- applying said intermediate forward transform to color coordinates representing said intermediate color in said intermediate color space in order to get the color coordinates representing this intermediate color in the device-independent color space;
- in said device-independent color space, mapping said intermediate color from said intermediate color gamut into said target gamut, resulting in said target color,
- applying the inverse color transform to the color coordinates representing approximately this target color in the device-independent color space in order to get the color coordinates representing this target color in said target device-dependent color space.

A subject of the invention is also a color mapper for mapping source colors of images of a video content into the target color gamut of a target color device thus resulting in target colors, wherein said images are grouped into a plurality of groups associated with different source content-dependent color gamuts, each group comprising at least one image, said color mapper being configured:

- to define a single intermediate color gamut for the whole video content in an intermediate color space,
- to map each source color of each group of images in said intermediate color space, from the source content-dependent color gamut associated with said group into said intermediate color gamut, resulting in an intermediate color, and
- to map said intermediate color from said intermediate color gamut into said target color gamut, resulting in a target color.

The subject of the invention is also a method of mapping source colors of images of a video content into the target color gamut of a target color device thus resulting in target colors,
wherein a single intermediate color gamut is defined for the whole video content,
wherein said images are grouped into a plurality of groups, each group comprising at least one image,
said gamut mapping method comprising, for each group of images, the step of defining a source content-dependent color gamut as including all source colors of images of this group,
and for each source color of image(s) of this group, the steps of :

    1/ mapping said source color from said source content-dependent color gamut into said intermediate color gamut, resulting in an intermediate color,
    2/ mapping said intermediate color from said intermediate color gamut into said target gamut, resulting in a target color.

The subject of the invention is also a color mapper for mapping source colors of images of a video content into the target color gamut of a target color device thus resulting in target colors, wherein said images are grouped into a plurality of groups, each group comprising at least one image, said color mapper being configured:

    to define a single intermediate color gamut for the whole video content,
    to define, for each group of images, a source content-dependent color gamut as including all source colors of images of this group,
    to map each source color of image(s) of this group from said source content-dependent color gamut into said intermediate color gamut, resulting in an intermediate color,
    and to map said intermediate color from said intermediate color gamut into said target gamut, resulting in a target color.

The method according the invention may have notably the following advantages with respect to classical color gamut mapping:

• As opposed to prior art gamut mapping, as source colors to map do not need to be transformed into device independent color coordinates to be mapped in the intermediate color space, complexity and computational load is reduced; similarly, metadata such as those defining the boundary of a source content dependent color gamut in intermediate color space does not need to be transformed into device independent color space, thus complexity and computational load is reduced;

- As opposed to prior art gamut mapping, when the source content dependent color gamut boundary changes, for instance from one scene to another scene of a video content, the proposed color gamut mapping operator can be updated without updating the whole classical color management chain of the color mapping. The update is then less complex and computational load is reduced;

- The mapping method is split into a source content-dependent mapping and a device-dependent gamut mapping which are separated, then allowing not transforming the target color gamut boundary into device dependent color coordinates of the source device ; thus complexity and computational load is further reduced;

- The mapping method makes able to use a classical, device dependent color management Color Look Up Table from an existing, device dependent gamut mapping workflow and extend it with low computational complexity to a source content-dependent color gamut mapping workflow.

Brief description of drawings

The invention will be more clearly understood on reading the description which follows, given by way of non-limiting example and with reference to the appended figures in which:

- Figure 1, already mentioned, illustrates a mapping method according to the prior art,
- Figure 2, already mentioned, corresponds to the mapping method of figure 1 where the color gamut descriptors used to build the mapping operator are illustrated as based on the prior art,
- Figure 3, already mentioned, illustrates a main embodiment of the mapping method according to the invention,
- Figure 4 illustrates the first mapping step of the mapping method of this main embodiment,
- Figure 5 illustrates the second mapping step of the mapping method of this main embodiment,
- Figure 6 illustrates a preferred implementation of the main embodiment of figure 3,
- Figure 7 illustrate an example of implementation of the embodiment of figure 6.

Description of embodiments

The functions of the various elements shown in the figures may be provided through the use of a color mapper comprising dedicated hardware as well as hardware capable of executing software in association with appropriate software. Such hardware may notably include, without limitation, digital signal processor ("DSP"), read-only memory ("ROM") for storing software, random access memory ("RAM"), and non-volatile storage. Such a color mapper may be called "color box".

In the following **main embodiment,** the invention is be described in the context of mapping colors of images of a video content such that these images can be reproduced with the best color quality using a specific target color device, such as a TV set, a color monitor, a color projector or the display device of any mobile device. The colors of the pixels of each image to reproduce are called "source colors". The target color device has its own target color gamut, which is, of course, device-dependent.

Images of this video content are grouped into groups of at least one image. In each group comprising a plurality of images, those images are temporally adjacent, i.e. successive. A group of images may notably correspond to a scene of this video content. Another possibility is that each group comprises only one image.

To source colors of images of each group, a source color gamut is associated in a manner known per se and encloses all source colors of the images of this group. This source color gamut is therefore content-dependent. Each group has then its specific source content-dependent color gamut. When a group corresponds to a scene, the corresponding source content-dependent color gamut corresponds to the content color gamut of this scene. Generally, the source color gamut varies from a group to another group of the video content to map.

An intermediate color gamut that does not change through the whole video content is defined. This intermediate color gamut does not change from one group of images to another one. Preferably, the shape of this intermediate color gamut is a cube. Such a shape has the advantage of being very easy to use for the implementation of the mapping method according to the invention. Here, an intermediate color space of an intermediate display device is used to represent this intermediate color gamut.

To implement the mapping method of this main embodiment, the source colors to map are represented in a manner known per se by RGB color coordinates in this intermediate color space.

In a first series of preliminary steps of the method of mapping source colors of images of the video content, the following operations are performed:

1. Defining a single intermediate color gamut for the whole video content and describing this intermediate color gamut in the intermediate color space by an intermediate gamut boundary description;
2. Describing the target color gamut by a target gamut boundary description in a device independent color space;
3. Defining an intermediate forward color transform adapted to transform color coordinates representing any color in the intermediate color space into color coordinates representing approximately the same color in the device-independent color space;

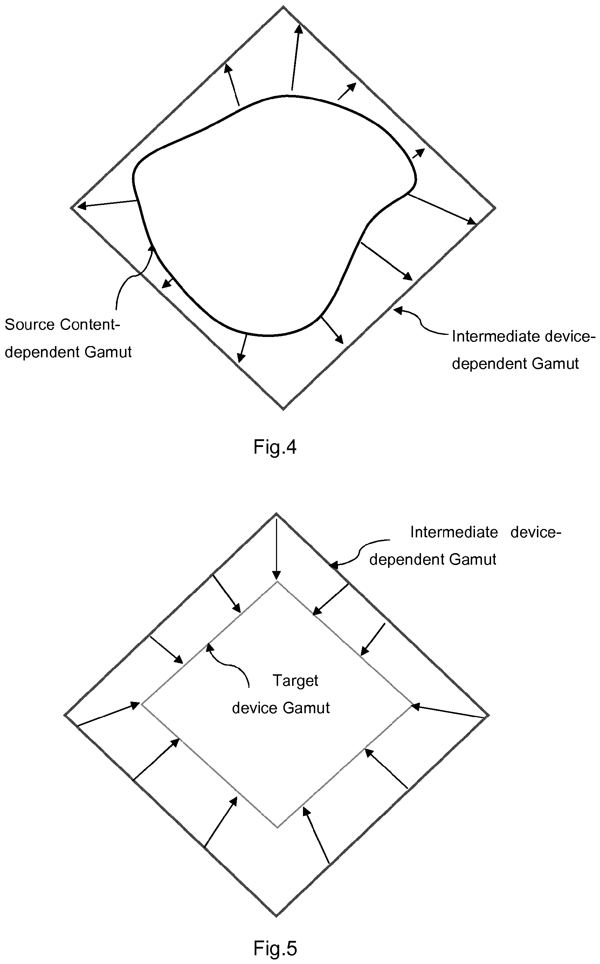

4. As illustrated on figure 5 by the straight arrows, defining a final gamut mapping operator able to map, in the device-independent color space, colors that are located inside the intermediate device-dependent gamut into colors inside the target device gamut;

5. Modeling the target color device by a target inverse color transform adapted to transform color coordinates representing, in the device-independent color space, any color within the color gamut of this target device into color coordinates representing approximately the same color in the target device-dependent color space.

In a second series of preliminary steps of the method according to the invention, for each group of images of the video content to map, the following operations are performed:

1. Defining, in the intermediate color space, a source content-dependent color gamut enclosing all source colors of the images of this group; more precisely, each group is associated with a specific source content-dependent color gamut having preferably boundaries corresponding to upper and lower limits of colors of the images of this group; these upper and lower limits are for instance defined along straight lines distributed over different directions in the intermediate color space. This source content-dependent color gamut is described by a source content-dependent gamut boundary description, represented by color coordinates RGB in this single intermediate color space;

2. As illustrated on figure 4 by the straight arrows, defining an intermediate gamut mapping operator able to map, directly in the intermediate color space, colors of the images of this group that are located inside the source content-dependent gamut described in this intermediate color space into colors inside the intermediate device-dependent gamut.

Thanks to the definition of this gamut operator, source colors to map do not need to be transformed into device independent color coordinates to be mapped in the intermediate color space.

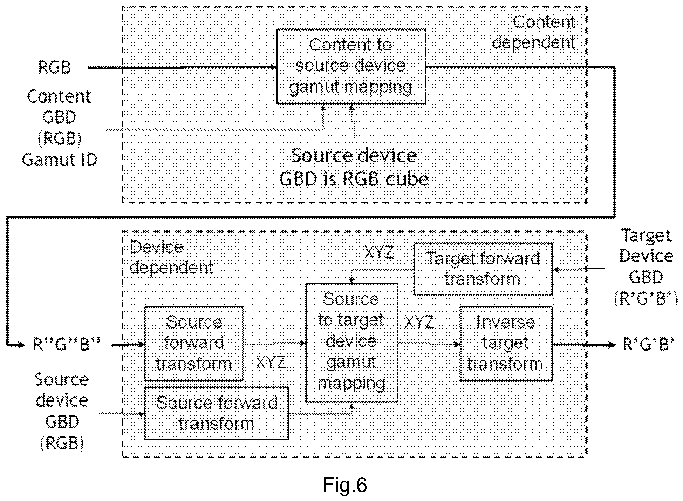

Then, for this group of images having its own source content-dependent color gamut and for each source color of the images of this group, the mapping method according to the invention is implemented according to the following four steps illustrated on figure 6:

1. Applying the intermediate gamut mapping operator to the source colors represented by color coordinates RGB in the intermediate color space in order to get intermediate colors represented by color coordinates R"G"B" in the same color space;

2. Applying the intermediate forward color transform to color coordinates R"G"B" in order to get the color coordinates XYZ of these intermediate colors in the device-independent color space;

3. Applying the final gamut mapping operator to these color coordinates XYZ of intermediate colors in order to get color coordinates X'Y'Z' representing target colors in the device-independent color space ;

4. Applying the target inverse color transform to these color coordinates X'Y'Z' in order to get the color coordinates R'G'B' of these target colors in the target device-dependent color space.

Steps 2 to 4 above correspond to the mapping of the intermediate colors from the intermediate color gamut common to all groups of images into the target color gamut, resulting in these target colors as defined above. Other methods of mapping of the intermediate colors from the intermediate color gamut into the target color gamut can be used without departing from the invention.

Generally, the source content-dependent color gamuts and their boundary descriptions vary from one group to another group of images.

Preferably, all color transforms and color mapping operators are represented by Look Up Tables (LUT).

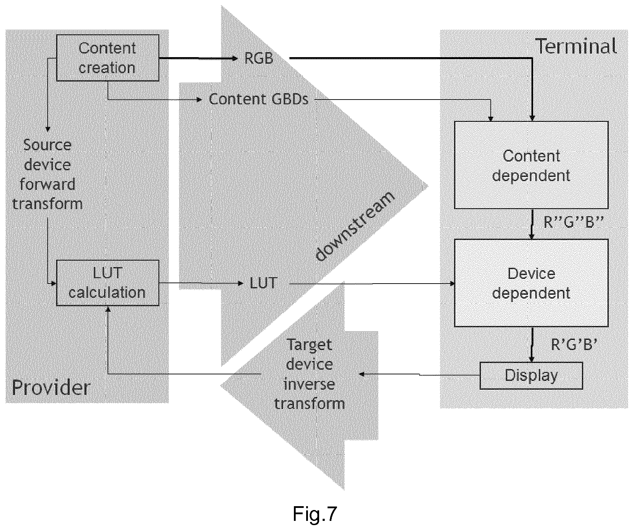

A specific example of the main embodiment above will now be described in reference to figures 6 and 7.

First, an intermediate device-dependent color gamut is chosen such that the boundary of this intermediate device-dependent color gamut is a three-dimensional cube in an intermediate color space. An intermediate forward model is then inferred such that it can transform color coordinates representing any color in the intermediate color space into color coordinates representing approximately the same color in the device-independent color space, here the XYZ color space.

This intermediate color space can be associated to an intermediate display device. In this case, the intermediate color space is output referred, is device-dependent, and the intermediate device-dependent color gamut is the color gamut of this intermediate display device. This intermediate color space can be associated to an intermediate image-capturing device such as a camera. In this case, the intermediate color space is scene referred and the intermediate device-dependent color gamut is the capture analysis color gamut of this intermediate image-capturing device according, for instance, to the report "Capture Color Analysis Gamuts" published by Jack Holm (see: http://www.color.org/documents/CaptureColorAnalysisGamuts.pdf).

As described above, images of the video content to map are grouped into a plurality of groups, corresponding, for instance, to the different scenes of this content.

Then, for each group, the mapping method of the example is implemented in four steps similar to the four steps of the main embodiment above:

1. In the intermediate color space, gamut mapping source colors from the source content-dependent gamut specific of this group into the intermediate device-dependent gamut, resulting in intermediate colors ; advantageously, this step is fast since the intermediate device-dependent gamut is described in the intermediate color space by a cube that can be described by six faces, only;

2. Application of the intermediate forward transform;

3. gamut mapping intermediate colors in the target gamut;

4. Application of the target Inverse transform.

where the first step is fast because implemented directly in a RGB intermediate color space, and ment to be reactive to dynamic metadata that may change from one group of images to another group of the video content while the other three steps 2, 3, and 4 make use - according to state of the art - of a device independent color space and may be slower but without any drawback because, being not ment to be reactive to dynamic metadata, they can be precalculated, for instance into a LUT. If these steps are precalculated in a LUT, there is no need to transform any color coordinates into a device independent color space.

To implement step 1 above, the gamut boundary description (GBD) that describes the source content-dependent gamut of each group in the intermediate color space is for instance constructed according to the basic profile of the IEC 61966-12-1 "Gamut ID" format. Each GBD of a source content-dependent gamut is described by 5 colors: red, green, blue, black, white. We build from this information six triangles that build together the boundary of a gamut:

- black-red-green;
- black-green-blue;
- black-blue-red;
- white-red-green;
- white-green-blue;
- white-blue-red.

The GBD for describing the intermediate device-dependent color gamut in the intermediate color space is simply the cube in source-device dependent RGB color space containing all valid RGB values. Preferably, the cube is limited in RGB color space by coordinates 0 and 255 in all three directions, R, G and B, as for a 8 bit display device.

Therefore, in this non-limiting example of step 1, any source color of the images of a same group, which is represented by its RGB coordinates in the intermediate color space, is mapped to an intermediate color having R"G"B" coordinates by the following operations:

a) Projection of the source color $C = \begin{pmatrix} R \\ G \\ B \end{pmatrix}$ onto the grey axis giving the anchor point $A$, the grey axis being the axis between the color (0,0,0) and the color (255,255,255).

b) Calculation of the intersection points $I_S$ and $I_T$ of the line going through C and A with the source and intermediate GBD, respectively;

c) Mapping all colors lying on the line section $\overline{AI_S}$ to the line section $\overline{AI_T}$, as so the color C becoming

mapped color $C'' = \begin{pmatrix} R'' \\ G'' \\ B'' \end{pmatrix}$.

Other, known gamut mapping algorithms might be used, such as algorithms using a single anchor point for all colors, or algorithms that map along curved lines instead of straight lines.

The outputs of step 1 are R"G"B" color coordinates representing intermediates colors in the intermediate color space.

As intermediate color space, we use the RGB color space such as defined by the ITU-R BT.709 standard. The intermediate color gamut is then the color gamut according to ITU-R BT.709 standard. Then, in step 2, the application of the intermediate forward color transform is performed according to the following two operations that are well known in the context of this standard:

a) Transforming R"G"B" coordinates of intermediate color into linear R"G"B" coordinates:

$$R_{LIN} = \begin{cases} \dfrac{1}{4.5} R'' & 0 \le R'' < 0.081 \\ R''^{1/0.45} & 0.081 \le R'' \le 1 \end{cases}$$

and equivalently for G" and B";

b) Transforming linear R"G"B" coordinates into XYZ coordinates representing the same intermediate color in the CIE XYZ device-independent color space:

$$\begin{pmatrix} X \\ Y \\ Z \end{pmatrix} = \begin{pmatrix} 0.41 & 0.36 & 0.18 \\ 0.21 & 0.72 & 0.07 \\ 0.02 & 0.12 & 0.95 \end{pmatrix} \begin{pmatrix} R_{LIN} \\ G_{LIN} \\ B_{LIN} \end{pmatrix}$$

In step 3, any known gamut mapping method can be used. This step corresponds to the classical case of device-to-device color gamut mapping in a device-independent color space. The outputs of step 3 are color coordinates representing target colors in the CIE XYZ color space.

In step 4, we describe the target inverse color transform by an ICC profile according to the standard ISO 15076-1:2005 entitled "Image technology colour management - Architecture, profile format and data structure - Part 1: Based on ICC.1:2004-10". If the target device display maker does not deliver the ICC profile, standard color characterization tools can be used to produce the ICC profile. In order to specify the target display device model, we will use colorimetric intent transforms of the ICC profile. For the target inverse transform, we use the colorimetric rendering intent transform B to A of the ICC profile. The output of step 4 are color coordinates R'G'B' representing target colors in the device-dependent color space of the target display device.

The diagram shown on figure 7 illustrates a non-limiting system configured to implement the mapping method exemplified above. A content provider sends to a terminal a classical, fixed, pre-calculated color management LUT that is calculated as a concatenation of steps 2 to 4 above by a LUT calculation module. The terminal comprises a color mapper configured to implement the two main steps of the method described above, namely 1/ in a "content dependent" module, mapping each source color in the intermediate color space, from a source content-dependent color gamut into the intermediate color gamut, and 2/ in a "device dependent" module, mapping the intermediate color provided by the "content dependent" module, from the intermediate color gamut into the target color gamut.

The "device dependent" module is configured to apply the LUT sent by the provider to the intermediate colors to map, as a device-dependent operator. The source content-dependent gamut boundary description "content GBD" specific to each group of images is sent to the "content dependent" module and used by this module for defining dynamically a "content-dependent" operator adapted to implement step 1 above, directly in the intermediate color space. This content GBD can be sent dynamically since this content-dependent operator is non-complex and operates directly in the intermediate color space. For example, each time a new group of images, notably a new scene, starts, a new "content GBD" is sent. Thus, for a video content, there will be generally more than one "content GBD" sent to the terminal. As shown on figure 7, the terminal sends once the target inverse transform to allow the provider to apply step 4 above before the concatenation with steps 2 and 3.

The target colors provided by the "device dependent" module are sent to the target "display" device which is also part of the terminal.

It is to be understood that the invention may be implemented in a color mapper implementing various forms of hardware, software, firmware, special purpose processors, or combinations thereof. The invention may be notably implemented as a combination of hardware and software. Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU and/or by a GPU. In addition, various other peripheral units may be connected to the computer platform such as an additional data storage unit and a printing unit.

While the present invention is described with respect to particular examples and preferred embodiments, it is understood that the present invention is not limited to these examples and embodiments.

## Claims

1. Method of, in a color mapper, mapping source colors of images of a video content into the target color gamut of a target color device thus resulting in target colors,
   wherein said images are grouped into a plurality of groups associated with different source content-dependent color gamuts, each group comprising at least one image, wherein each group of images is a scene of said video content, said gamut mapping method comprising:

   - in an intermediate color space, defining a single intermediate color gamut for the whole video content,
   - for each group of images, mapping each source color of this group in said intermediate color space, from the source content-dependent color gamut associated with said group into said intermediate color gamut, resulting in an intermediate color, and mapping said intermediate color from said intermediate color gamut into said target color gamut, resulting in a target color.

2. Mapping method according to claim 1, wherein said intermediate color space is associated with an intermediate display device.

3. Mapping method according to claim 1 or 2, wherein each group of at least one image is associated with a specific source content-dependent color gamut having boundaries corresponding to upper and lower limits of colors of the at least one image of this group.

4. Mapping method according to any one of claims 1 to 3, wherein, for said mapping of a source color from the source content-dependent color gamut into said intermediate color gamut, said source color is represented in said intermediate color space, said source content-dependent color gamut and said intermediate color gamut are described in said intermediate color space.

5. Method according to any one of claims 1 to 4 **characterized in that** the shape of said intermediate color gamut is a hyper cube when defined in said intermediate color space.

6. Method according to any one of claims 1 to 5 wherein said mapping from the source content-dependent color gamut into said intermediate color gamut is performed directly in said intermediate color space.

7. Method according to any one of claims 3 to 6, wherein said intermediate color space is associated with an intermediate display device,
wherein an intermediate forward transform associated with said intermediate display device is defined such as to be able to transform color coordinates representing any color in said intermediate color space into color coordinates representing approximately the same color in a device-independent color space,
wherein the target color device is modeled by a target inverse transform which is defined to be able to transform color coordinates representing any color in the device-independent color space into color coordinates representing approximately the same color in the target device-dependent color space associated with said target display device, and
wherein the mapping of said intermediate color from said intermediate color gamut into said target gamut comprises:

- applying said intermediate forward transform to color coordinates representing said intermediate color in said intermediate color space in order to get the color coordinates representing this intermediate color in the device-independent color space;
- in said device-independent color space, mapping said intermediate color from said intermediate color gamut into said target gamut, resulting in said target color,
- applying the inverse color transform to the color coordinates representing approximately this target color in the device-independent color space in order to get the color coordinates representing this target color in said target device-dependent color space.

8. Color mapper for mapping source colors of images of a video content into the target color gamut of a target color device thus resulting in target colors, wherein said images are grouped into a plurality of groups associated with different source content-dependent color gamuts, each group comprising at least one image, wherein each group of images is a scene of said video content, said color mapper being configured:

- to define a single intermediate color gamut for the whole video content in an intermediate color space,
- to map each source color of each group of images in said intermediate color space, from the source content-dependent color gamut associated with said group into said intermediate color gamut, resulting in an intermediate color, and
- to map said intermediate color from said intermediate color gamut into said target color gamut, resulting in a target color.

9. Color mapper according to claim 8, wherein each group of at least one image is associated with a specific source content-dependent color gamut having boundaries corresponding to upper and lower limits of colors of the at least one image of this group.

10. Color mapper according to any one of claims 8 and 9, wherein, for said mapping of a source color from the source content-dependent color gamut into said intermediate color gamut, the color mapper is configured to represent said source color in said intermediate color space, and to describe said source content-dependent color gamut and said intermediate color gamut in said intermediate color space.

11. Color mapper according to any one of claims 8 to 10 **characterized in that** the shape of said intermediate color gamut is a hyper cube when defined in said intermediate color space.

12. Electronic device comprising a color mapper according to any one of claims 8 to 11.

13. Display device comprising a color mapper according to any one of claims 8 to 11.

14. Computer program product comprising program code instructions to execute the steps of the method according to any one of the claims 1 to 7, when this program is executed by a processor.

**Patentansprüche**

1. Verfahren zur Zuordnung von Quellfarben von Bildern eines Videoinhalts zu einer Zielfarbenskala einer Zielfarbenvorrichtung in einer Farbzuordnungsvorrichtung, was somit zu Zielfarben führt,
wobei die Bilder in einer Vielzahl von Gruppen, die verschiedenen inhaltsabhängigen Quellfarbenskalen zugehören, gruppiert sind, wobei jede Gruppe wenigstens ein Bild umfasst,
wobei jede Gruppe von Bildern eine Szene des Videoinhalts ist, wobei das Skalenzuordnungsverfahren Folgendes umfasst:

- einen Zwischenfarbenraum, der eine einzelne Zwischenfarbenskala für den gesamten Videoinhalt festlegt,
- für jede Gruppe von Bildern Zuordnen jeder Quellfarbe dieser Gruppe in dem Zwischenfarbenraum aus der inhaltsabhängigen Quellfarbenskala, die der Gruppe zugehört, zu der Zwischenfarbenskala, was zu einer Zwischenfarbe führt, und Zuordnen der Zwischenfarbe aus der Zwischenfarbenskala zu der Zielfarbenskala, was zu einer Zielfarbe führt.

2. Zuordnungsverfahren nach Anspruch 1, wobei der Zwischenfarbenraum einer Zwischenanzeigevorrichtung zugehört.

3. Zuordnungsverfahren nach Anspruch 1 oder 2, wobei jede Gruppe wenigstens eines Bildes einer spezifischen inhaltsabhängigen Quellfarbenskala zugehört, die Grenzen aufweist, die einem oberen und einem unteren Grenzwert von Farben des wenigstens einen Bildes dieser Gruppe entsprechen.

4. Zuordnungsverfahren nach einem der Ansprüche 1 bis 3, wobei für die Zuordnung einer Quellfarbe aus der inhaltsabhängigen Quellfarbenskala zu der Zwischenfarbenskala jede Quellfarbe in dem Zwischenfarbenraum dargestellt ist, wobei die inhaltsabhängige Quellfarbenskala und die Zwischenfarbenskala in dem Zwischenfarbenraum beschrieben werden.

5. Verfahren nach einem der Ansprüche 1 bis 4, **dadurch gekennzeichnet, dass** die Form der Zwischenfarbenskala bei Definition in dem Zwischenfarbenraum einem Hyperkubus entspricht.

6. Verfahren nach einem der Ansprüche 1 bis 5, wobei die Zuordnung aus der inhaltsabhängigen Quellfarbenskala zu der Zwischenfarbenskala direkt in dem Zwischenfarbenraum erfolgt.

7. Verfahren nach einem der Ansprüche 3 bis 6, wobei der Zwischenfarbenraum einer Zwischenanzeigevorrichtung zugehört,
wobei eine Zwischenvorwärtstransformation, die der Zwischenanzeigevorrichtung zugehört, auf eine solche Weise festgelegt ist, dass sie in der Lage ist, Farbkoordinaten, die jede beliebige Farbe in dem Zwischenfarbenraum darstellen, in Farbkoordinaten zu transformieren, die in etwa die gleiche Farbe in einem vorrichtungsabhängigen Farbenraum darstellen,
wobei die Zielfarbenvorrichtung durch eine inverse Zieltransformation modelliert wird, die so festgelegt ist, dass sie in der Lage ist, Farbkoordinaten, die eine beliebige Farbe in dem vorrichtungsabhängigen Farbenraum darstellen, in Farbkoordinaten zu transformieren, die in etwa die gleiche Farbe in dem vorrichtungsabhängigen Zielfarbenraum darstellen, der der Zielanzeigevorrichtung zugehört, und
wobei die Zuordnung der Zwischenfarbe aus der Zwischenfarbenskala in die Zielskala Folgendes umfasst:

- Anwenden der Zwischenvorwärtstransformation auf Farbkoordinaten, die die Zwischenfarbe in dem Zwischenfarbenraum darstellen, um die Farbkoordinaten zu erhalten, die diese Zwischenfarbe in dem vorrichtungsabhängigen Farbenraum darstellen,
- in dem vorrichtungsabhängigen Farbenraum Zuordnen der Zwischenfarbe aus der Zwischenfarbenskala zu der Zielskala, was zu der Zielfarbe führt,
- Anwenden der inversen Farbtransformation auf die Farbkoordinaten, die in etwa diese Zielfarbe in dem vorrichtungsabhängigen Farbenraum darstellen, um die Farbkoordinaten zu erhalten, die diese Zielfarbe in dem vorrichtungsabhängigen Zielfarbenraum darstellen.

8. Farbzuordnungsvorrichtung zur Zuordnung von Quellfarben von Bildern eines Videoinhalts zu einer Zielfarbenskala einer Zielfarbenvorrichtung, was somit zu Zielfarben führt, wobei die Bilder in einer Vielzahl von Gruppen, die verschiedenen inhaltsabhängigen Quellfarbenskalen zugehören, gruppiert sind, wobei jede Gruppe wenigstens ein Bild umfasst, wobei jede Gruppe von Bildern eine Szene des Videoinhalts ist, wobei die Farbzuordnungsvorrichtung dazu ausgelegt ist:

- eine einzelne Zwischenfarbenskala für den gesamten Videoinhalt in einem Zwischenfarbenraum festzulegen,
- jede Quellfarbe jeder Gruppe von Bildern in dem Zwischenfarbenraum aus der inhaltsabhängigen Quellfarbenskala, die der Gruppe zugehört, der Zwischenfarbenskala zuzuordnen, was zu einer Zwischenfarbe führt, und
- die Zwischenfarbe aus der Zwischenfarbenskala der Zielfarbenskala zuzuordnen, was zu einer Zielfarbe führt.

9. Farbzuordnungsvorrichtung nach Anspruch 8, wobei jede Gruppe wenigstens eines Bildes einer spe-

zifischen inhaltsabhängigen Quellfarbenskala zuge-hört, die Grenzen aufweist, die einem oberen und einem unteren Grenzwert von Farben des wenigstens einen Bildes dieser Gruppe entsprechen.

10. Farbzuordnungsvorrichtung nach einem der Ansprüche 8 und 9, wobei für die Zuordnung einer Quellfarbe aus der inhaltsabhängigen Quellfarbenskala zu der Zwischenfarbenskala die Farbzuordnungsvorrichtung dazu ausgelegt ist, die Quellfarbe in dem Zwischenfarbenraum darzustellen und die inhaltsabhängige Quellfarbenskala und die Zwischenfarbenskala in dem Zwischenfarbenraum zu beschreiben.

11. Farbzuordnungsvorrichtung nach einem der Ansprüche 8 bis 10, **dadurch gekennzeichnet, dass** die Form der Zwischenfarbenskala bei Definition in dem Zwischenfarbenraum einem Hyperkubus entspricht.

12. Elektronische Vorrichtung, die eine Farbzuordnungsvorrichtung nach einem der Ansprüche 8 bis 11 umfasst.

13. Anzeigevorrichtung, die eine Farbzuordnungsvorrichtung nach einem der Ansprüche 8 bis 11 umfasst.

14. Computerprogrammprodukt, das Programmcodeanweisungen zur Durchführung der Schritte des Verfahrens nach einem der Ansprüche 1 bis 7 umfasst, wenn dieses Programm von einem Prozessor ausgeführt wird.


**Revendications**

1. Procédé, dans un mappeur de couleurs, de mappage de couleurs source d'images d'un contenu vidéo vers la gamme de couleurs cible d'un dispositif de couleurs cible générant ainsi des couleurs cible, dans lequel lesdites images sont regroupées en une pluralité de groupes associés à différentes gammes de couleurs dépendant du contenu source, chaque groupe comprenant au moins une image, dans lequel chaque groupe d'images est une scène dudit contenu vidéo, ledit procédé de mappage de gamme comprenant :

     - dans un espace de couleurs intermédiaire, la définition d'une gamme de couleurs intermédiaire unique pour l'intégralité du contenu vidéo,
     - pour chaque groupe d'images, le mappage de chaque couleur source de ce groupe dans ledit espace de couleurs intermédiaire de la gamme de couleurs dépendant du contenu source associée audit groupe vers ladite gamme de couleurs intermédiaire, générant une couleur intermédiaire, et le mappage de ladite couleur intermédiaire de ladite gamme de couleurs intermédiaire vers ladite gamme de couleurs cible, générant une couleur cible.

2. Procédé de mappage selon la revendication 1, dans lequel ledit espace de couleurs intermédiaire est associé à un dispositif d'affichage intermédiaire.

3. Procédé de mappage selon la revendication 1 ou 2, dans lequel chaque groupe d'au moins une image est associé à une gamme spécifique de couleurs dépendant du contenu source ayant des limites correspondant à des limites supérieures et inférieures de couleurs de la au moins une image de ce groupe.

4. Procédé de mappage selon l'une quelconque des revendications 1 à 3, dans lequel, pour ledit mappage d'une couleur source de la gamme de couleurs dépendant du contenu source vers ladite gamme de couleurs intermédiaire, ladite couleur source est représentée dans ledit espace de couleurs intermédiaire, ladite gamme de couleurs dépendant du contenu source et ladite gamme de couleurs intermédiaire sont décrites dans ledit espace de couleurs intermédiaire.

5. Procédé selon l'une quelconque des revendications 1 à 4, **caractérisé en ce que** la forme de ladite gamme de couleurs intermédiaire est un hypercube lorsqu'elle est définie dans ledit espace de couleurs intermédiaire.

6. Procédé selon l'une quelconque des revendications 1 à 5, dans lequel ledit mappage de la gamme de couleurs dépendant du contenu source vers ladite gamme de couleurs intermédiaire est effectué directement dans ledit espace de couleurs intermédiaire.

7. Procédé selon l'une quelconque des revendications 3 à 6, dans lequel ledit espace de couleurs intermédiaire est associé à un dispositif d'affichage intermédiaire, dans lequel une transformée directe intermédiaire associée audit dispositif d'affichage intermédiaire est définie de manière à pouvoir transformer les coordonnées de couleur représentant n'importe quelle couleur dans ledit espace de couleurs intermédiaire en coordonnées de couleur représentant approximativement la même couleur dans un espace de couleurs indépendant du dispositif, dans lequel le dispositif de couleurs cible est modélisé par une transformée inverse cible définie de manière à pouvoir transformer les coordonnées de couleur représentant n'importe quelle couleur dans l'espace de couleurs indépendant du dispositif en coordonnées de couleur représentant approximativement la même couleur dans l'espace de couleurs dépendant du dispositif cible associé audit dispositif d'affichage cible, et

dans lequel le mappage de ladite couleur intermédiaire de ladite gamme de couleurs intermédiaire vers ladite gamme cible comprend :

- l'application de ladite transformée directe intermédiaire aux coordonnées de couleur représentant ladite couleur intermédiaire dans ledit espace de couleurs intermédiaire pour obtenir les coordonnées de couleur représentant cette couleur intermédiaire dans l'espace de couleurs indépendant du dispositif ;
- dans ledit espace de couleurs indépendant du dispositif, le mappage de ladite couleur intermédiaire de ladite gamme de couleurs intermédiaire vers ladite gamme cible, générant ladite couleur cible,
- l'application de la transformée de couleur inverse aux coordonnées de couleur représentant approximativement cette couleur cible dans l'espace de couleurs indépendant du dispositif pour obtenir les coordonnées de couleur représentant cette couleur cible dans ledit espace de couleurs dépendant du dispositif cible.

8. Mappeur de couleurs pour mapper des couleurs source d'images d'un contenu vidéo vers la gamme de couleurs cible d'un dispositif de couleurs cible générant ainsi des couleurs cible, dans lequel lesdites images sont regroupées en une pluralité de groupes associés à différentes gammes de couleurs dépendant du contenu source, chaque groupe comprenant au moins une image, dans lequel chaque groupe d'images est une scène dudit contenu vidéo, ledit mappeur de couleurs étant configuré :

- pour définir une gamme de couleurs intermédiaire unique pour l'intégralité du contenu vidéo dans un espace de couleurs intermédiaire,
- pour mapper chaque couleur source de chaque groupe d'images dans ledit espace de couleurs intermédiaire de la gamme de couleur dépendant du contenu source associée audit groupe vers ladite gamme de couleurs intermédiaire, générant une couleur intermédiaire, et
- pour mapper ladite couleur intermédiaire de ladite gamme de couleurs intermédiaire vers ladite gamme de couleurs cible, générant une couleur cible.

9. Mappeur de couleurs selon la revendication 8, dans lequel chaque groupe d'au moins une image est associé à une gamme de couleur dépendant du contenu source spécifique ayant des limites correspondant à des limites supérieures et inférieures de couleurs de la au moins une image de ce groupe.

10. Mappeur de couleurs selon l'une quelconque des revendications 8 et 9, dans lequel, pour ledit mappage d'une couleur source de la gamme de couleurs dépendant du contenu source vers ladite gamme de couleurs intermédiaire, le mappeur de couleurs est configuré pour représenter ladite couleur source dans ledit espace de couleurs intermédiaire, et pour décrire ladite gamme de couleurs dépendant du contenu source et ladite gamme de couleurs intermédiaire dans ledit espace de couleurs intermédiaire.

11. Mappeur de couleurs selon l'une quelconque des revendications 8 à 10, **caractérisé en ce que** la forme de ladite gamme de couleurs intermédiaire est un hypercube lorsqu'elle est définie dans ledit espace de couleurs intermédiaire.

12. Dispositif électronique comprenant un mappeur de couleurs selon l'une quelconque des revendications 8 à 11.

13. Dispositif d'affichage comprenant un mappeur de couleurs selon l'une quelconque des revendications 8 à 11.

14. Programme informatique comprenant des instructions de code de programme pour exécuter les étapes du procédé selon l'une quelconque des revendications 1 à 7, lorsque ce programme est exécuté par un processeur.

Fig.1

Fig.2

Fig.3

Source Content-
dependent Gamut

Intermediate device-
dependent Gamut

Fig.4

Intermediate device-
dependent Gamut

Target
device Gamut

Fig.5

Fig.6

Fig.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010220237 A

**Non-patent literature cited in the description**

- **FANG-HSUAN GHENG et al.** Color reproduction system based on color appearance model and gamut mapping. *Proceedings of SPIE,* 2000, vol. 4080, 167-178

- **DONG-WOO KANG.** COLOR DECOMPOSITION METHOD FOR MULTIPRIMARY DISPLAY USING 3D-LUT IN LINEARIZED LAB SPACE. *Proceedings of the SPIE,* vol. 5667 (1), 354-63